# EUROPÄISCHE PATENTANMELDUNG

(11) **EP 4 005 734 A1**
(43) Veröffentlichungstag der Anmeldung: **01.06.2022**
(21) Anmeldenummer: 20210522.7
(22) Anmeldetag: 30.11.2020
(51) Int. Cl.: B25B 27/10, B21D 15/04, F16H 25/20

(54) **KOPPLUNGSMECHANISMUS**

(71) Anmelder: Hilti Aktiengesellschaft, 9494 Schaan (LI)
(72) Erfinder: Knyrim, Maximilian, 89584 Ehingen (DE)
(74) Vertreter: Hilti Aktiengesellschaft Corporate Intellectual Property

(57) **Zusammenfassung**

Werkzeugmaschine, insbesondere eine Rohrpresse, enthaltend einen Antrieb, eine Getriebevorrichtung, einen Gewindespindeltrieb und einen Linearaktuator, wobei ein von dem Antrieb erzeugtes Drehmoment über die Getriebevorrichtung, den Gewindespindeltrieb auf den Linearaktuator übertragbar ist.

Die Werkzeugmaschine enthält eine Kopplungsvorrichtung mit einer Hülse und einem Kolben zur Übertragung einer von der Getriebevorrichtung erzeugten Drehbewegung in eine auf den Gewindespindeltrieb zu übertragende Linearbewegung von der Getriebevorrichtung zur Gewindespindeltrieb, wobei zwischen der Hülse und dem Kolben ein Verzahnungsprofil zur drehfesten Verbindung des Kolbens zu der Hülse enthalten ist, sodass der Kolben axial verschiebbar zu der Hülse sowie drehfest mit dem Gewindespindeltrieb angeordnet ist.

## Beschreibung

### Kopplungsmechanismus

Die Erfindung betrifft eine Werkzeugmaschine, insbesondere eine Rohrpresse, enthaltend einen Antrieb, eine Getriebevorrichtung, einen Gewindespindeltrieb und einen Linearaktuator, wobei ein von dem Antrieb erzeugtes Drehmoment über die Getriebevorrichtung, den Gewindespindeltrieb auf den Linearaktuator übertragbar ist.

Aus dem Stand der Technik sind unterschiedliche Werkzeugmaschinen für Umform- und Schneideprozesse bekannt. Mit Hilfe dieser speziellen Werkzeugmaschinen können beispielsweise Armierungseisen durchtrennt, Rohre mechanisch verbunden oder Schlauchschellen aufgepresst werden. Zu den Aufgaben des mechanischen Verbindens gehört auch das sogenannte Crimpen, Bördeln und Quetschen.

Um die erforderlichen hohen Presskräfte für beispielsweise das Crimpen von Stahlrohren zu realisieren, verfügen die am Markt erhältlichen Umformmaschinen einen von einem Presszylinder angetriebenen Presskopf. Häufig wird dabei der Presszylinder zum Bewegen des Presskopfs hydraulisch angetrieben. Ein Elektromotor treibt wiederum eine Hydraulikpumpe an, welche die Linearbewegung des Presszylinders abtreibt. Alternativ sind auch mechanische Press-, Schneide- und Crimptools am Markt erhältlich, welche statt der Hydraulik den Pressdruck über einen Gewindespindeltrieb in Kombination mit einem Elektromotor erzeugen. Hierbei wird die Rotationsbewegung des Elektromotors über eine Gewindespindel in eine lineare Bewegung auf einen Linearaktuator transformiert. Häufig enthalten diese Werkzeugmaschine ein zwischen Gewindespindeltrieb und Elektromotor geschaltetes Getriebe zur Reduktion des erforderlichen Motordrehmoments und um dadurch den Motor kleiner dimensionieren zu können.

Diese aus dem Stand der Technik bekannten Werkzeugmaschinen weisen jedoch häufig das Problem auf, dass der Elektromotor einer relativ hohen Reaktionskraft von der Pressbewegung des als Presskopfs ausgestalteten Werkzeugs ausgesetzt ist. Hierdurch kann der Elektromotor stark belastet werden, wodurch wiederum relativ hohe Reibmomente und eine ineffiziente Arbeitsweise des Elektromotors resultiert.

Die vorliegende Erfindung stellt sich daher die Aufgabe eine Werkzeugmaschine, insbesondere eine Rohrpresse, enthaltend einen Antrieb, einen Gewindespindeltrieb und einen Linearaktuator bereitzustellen, um die vorstehend genannten Probleme zu lösen und insbesondere eine Werkzeugmaschine mit einer Kopplungsvorrichtung bereits zu stellen, die bei einem Antreiben eines Gewindespindeltriebs gleichzeitig eine axiale Gleitbewegung erlaubt, sodass eine axiale Längenänderung im Antriebsstrang der Werkzeugmaschine ausgeglichen während ein Drehmoment übertragen wird.

Die Aufgabe wird insbesondere gelöst durch das Bereitstellen einer Werkzeugmaschine, insbesondere eine Rohrpresse, gemäß Anspruch 1 enthaltend einen Antrieb, eine Getriebevorrichtung, einen Gewindespindeltrieb und einen Linearaktuator, wobei ein von dem Antrieb erzeugtes Drehmoment über die Getriebevorrichtung, den Gewindespindeltrieb auf den Linearaktuator übertragbar ist.

Erfindungsgemäß enthält die Werkzeugmaschine eine Kopplungsvorrichtung mit einer Hülse und einem Kolben zur Übertragung einer von der Getriebevorrichtung erzeugten Drehbewegung in eine auf den Gewindespindeltrieb zu übertragende Linearbewegung von der Getriebevorrichtung zur Gewindespindeltrieb, wobei zwischen der Hülse und dem Kolben ein Verzahnungsprofil zur drehfesten Verbindung des Kolbens zu der Hülse enthalten ist, sodass der Kolben axial verschiebbar zu der Hülse sowie drehfest mit dem Gewindespindeltrieb angeordnet ist.

Vorteilhafte Ausgestaltungen sind in den Unteransprüchen beschrieben.

Gemäß eines vorteilhaften Ausführungsbeispiels ist das Verzahnungsprofil in Form einer Vielzahngeometrie ausgestaltet. Hierdurch kann eine besonders hohe Drehfestigkeit zwischen der Hülse und dem Kolben erzeugt werden. Gleichzeitig ist eine sichere axiale Verschiebung des Kolbens zu der Hülse gewährleistet.

Weitere Vorteile ergeben sich aus der folgenden Figurenbeschreibung.

In den Figuren sind verschiedene Ausführungsbeispiele der vorliegenden Erfindung dargestellt.

Die Figuren, die Beschreibung und die Patentansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponente und Baugruppen mit gleichen Bezugszeichen beziffert.

Es zeigt:
- Figur 1: eine seitliche Ansicht auf eine erfindungsgemäße Werkzeugmaschine in Ausgestaltung einer Rohrpresse;
- Figur 2: eine seitliche Schnittansicht auf die beispielhaft als Rohrpresse ausgestaltete Werkzeugmaschine mit einem Antrieb, einer Kopplungsvorrichtung, einem Gewindespindeltrieb, einem Linearaktuator und einer Getriebevorrichtung;
- Figur 3: eine perspektivische Schnittansicht auf die Getriebevorrichtung mit einem Teil der Kopplungsvorrichtung sowie einem ersten und zweiten Lager;
- Figur 4: eine perspektivische Schnittansicht auf die Kopplungsvorrichtung;
- Figur 5: eine seitliche Schnittansicht auf einen Teilbereich des Inneren der Werkzeugmaschine in einem ersten Zustand;
- Figur 6: eine seitliche Schnittansicht auf einen Teilbereich des Inneren der Werkzeugmaschine in einem zweiten Zustand; und
- Figur 7: eine seitliche Schnittansicht auf einen Teilbereich des Inneren der Werkzeugmaschine in einem dritten Zustand.

### Detaillierte Beschreibung der Erfindung:

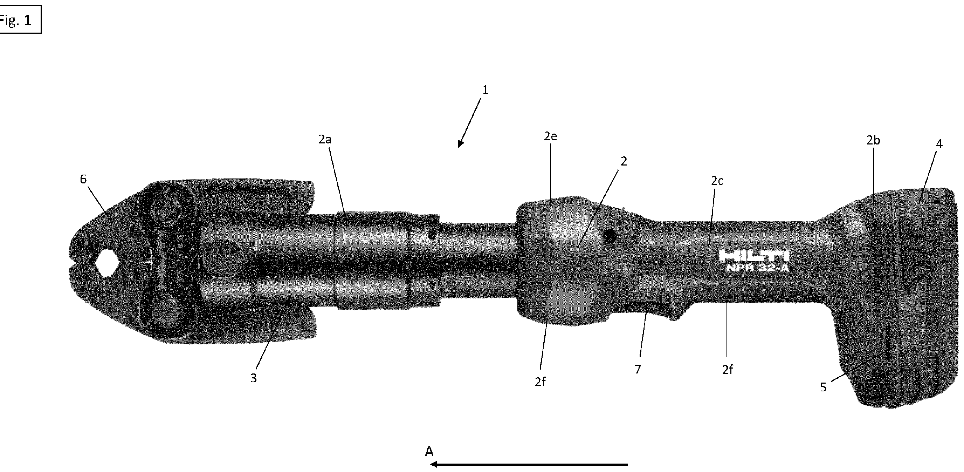

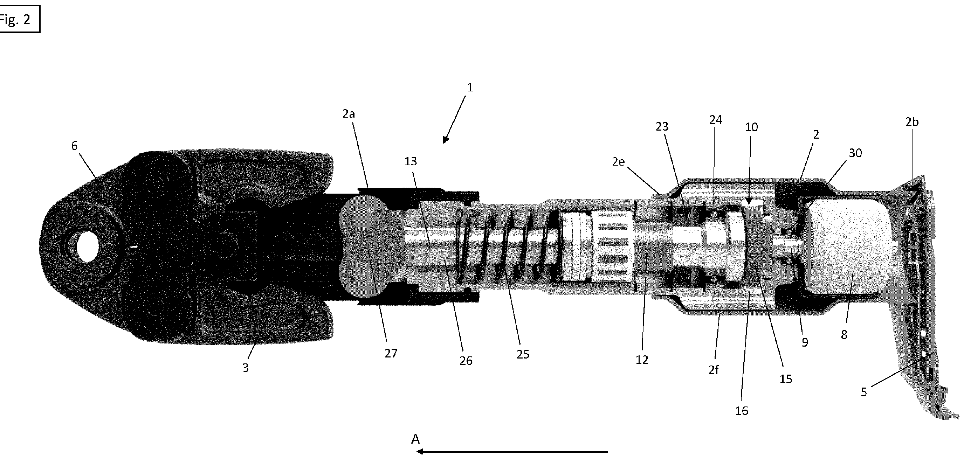

In Figur 1 und 2 ist eine erfindungsgemäße Werkzeugmaschine 1 in einer beispielhaften Ausgestaltung als Rohrpresse gezeigt. Anstelle der Ausgestaltung als Rohrpresse kann die Werkzeugmaschine 1 auch als jede andere Schneid- oder Umformwerkzeug ausgestaltet sein. So ist es insbesondere auch möglich, dass die erfindungsgemäße Werkzeugmaschine 1 als Auspressgerät für chemische Substanzen, wie z.B. Klebstoff oder Dübelmasse ausgestaltet ist. Derartige Auspressgeräte könne auch als Dispenser bezeichnet werden.

Wie in Figur 1 zu erkennen ist, weist die als Rohrpresse ausgestaltete Werkzeugmaschine 1 im Wesentlichen ein Gehäuse 2, eine Werkzeugaufnahme 3 und eine Energieversorgung 4 auf.

Das Gehäuse 2 der Werkzeugmaschine 1 ist im Wesentlichen zylindrisch ausgestaltet und enthält ein vorderes Ende 2a, ein hinteres Ende 2b, eine linke Seitenfläche 2c, eine rechte Seitenfläche 2d, eine Oberseite 2e und eine Unterseite 2f. Ein mittlerer Anteil 2g des Gehäuses 2 dient als Handgriff zum Halten bzw. Führen der Werkzeugmaschine 1. In den Figuren 1 bis 3 ist lediglich die linke Seitenfläche 2c dargestellt.

An dem hinteren Ende 2b des Gehäuses 2 der Werkzeugmaschine 1 ist die Energieversorgung 4 positioniert. Im vorliegenden Ausführungsbeispiel ist die Energieversorgung 4 als Akkumulator (auch Akku oder Batterie genannt) ausgestaltet. Die als Akkumulator ausgestaltete Energieversorgung 4 kann wiederlösbar über eine Schnittstelle 5 mit dem hinteren Ende 2b des Gehäuses 2 der Werkzeugmaschine 1 verbunden werden. Mit Hilfe des Akkumulators 4 wird die Werkzeugmaschine 1 bzw. die elektrischen Verbraucher der Werkzeugmaschine 1 mit elektrischer Energie versorgt.
Gemäß einer alternativen Ausgestaltung der vorliegenden Erfindung kann die Energieversorgung 4 der Werkzeugmaschine 1 auch als Stromkabel ausgestaltet sein zum wiederlösbaren Verbinden der Werkzeugmaschine 1 mit einer Stromnetzquelle (d.h. Steckdose).

An dem vorderen Ende 2a des Gehäuses 2 der Werkzeugmaschine 1 ist die Werkzeugaufnahme 3 positioniert zum wiederlösbaren Aufnehmen und Halten eines Werkzeugs 6. An der Werkzeugaufnahme 3 ist in dem vorliegenden Ausführungsbeispiel ein Werkzeug 6 in Form eines Umformwerkzeugs positioniert. Das Umformwerkzeug 6 ist im vorliegenden Ausführungsbeispiel als sogenannter Presskopf ausgestaltet. Das als Presskopf ausgestaltete Umformwerkzeug 6 dient im Wesentlichen zum Bearbeiten und insbesondere Umformen von Leitungen, d.h. Rohre und Röhren. Bei dem Umformprozess wird mit Hilfe des als Presskopf ausgestalteten Werkzeugs im Wesentlichen der Durchmesser der Leitungen verkleinert. Die Leitungen sind in den Figuren nicht gezeigt.

An der Unterseite 2f des Gehäuses 2 der Werkzeugmaschine 1 ist ein Aktivierungsschalter 7 positioniert. Mit Hilfe des Aktivierungsschalters 7 kann die Werkzeugmaschine 1 gestartet und gestoppt werden.

Im Inneren des Gehäuses 2 der Werkzeugmaschine 1 ist im Wesentlichen ein Antrieb 8, eine Antriebswelle 9, eine Getriebevorrichtung 10, eine Kopplungsvorrichtung 11, ein Gewindespindeltrieb 12 und ein Linearaktuator 13 positioniert. Der Antrieb 8 ist in dem vorliegenden Ausführungsbeispiel als bürstenloser Elektromotor ausgestaltet.

Die Getriebevorrichtung 10 ist in dem vorliegenden Ausführungsbeispiel als Exzentergetriebevorrichtung ausgestaltet. Gemäß einer alternativen Ausführungsform kann die Getriebevorrichtung auch in anderen Form als eine Exzentergetriebevorrichtung ausgestaltet sein.

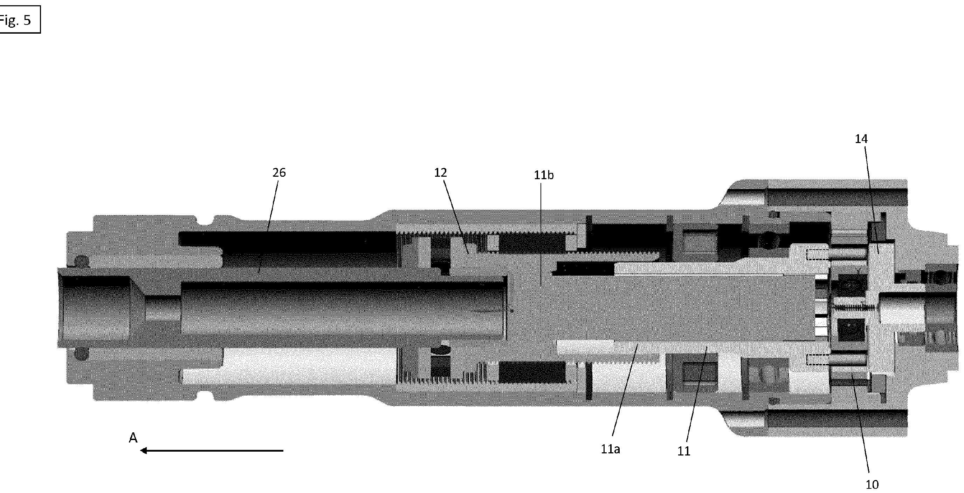

Wie in den Figuren 2 und 5 dargestellt ist der als bürstenloser Elektromotor ausgestaltete Antrieb 8 über die Antriebswelle 9 mit der als Exzentergetriebevorrichtung ausgestalteten Getriebevorrichtung 10 verbunden. Durch die Verbindung mit der Antriebswelle 9 wird ein in dem Antrieb 8 erzeugtes Drehmoment von dem Antrieb 8 auf die Getriebevorrichtung 10 übertragen.

Mit Hilfe der Getriebevorrichtung 10 kann eine Drehzahlübersetzung vom Antrieb 8 auf die Abtriebswelle 11 erzeugt werden.

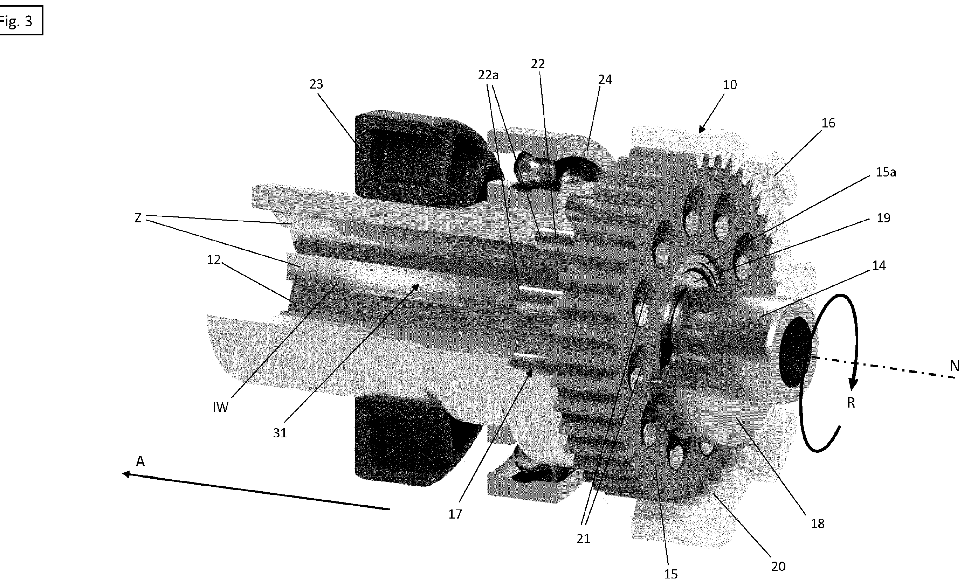

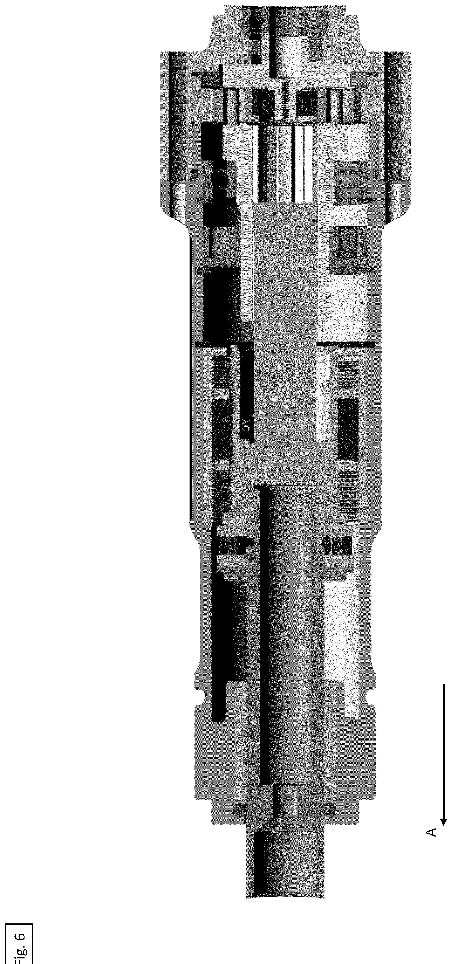

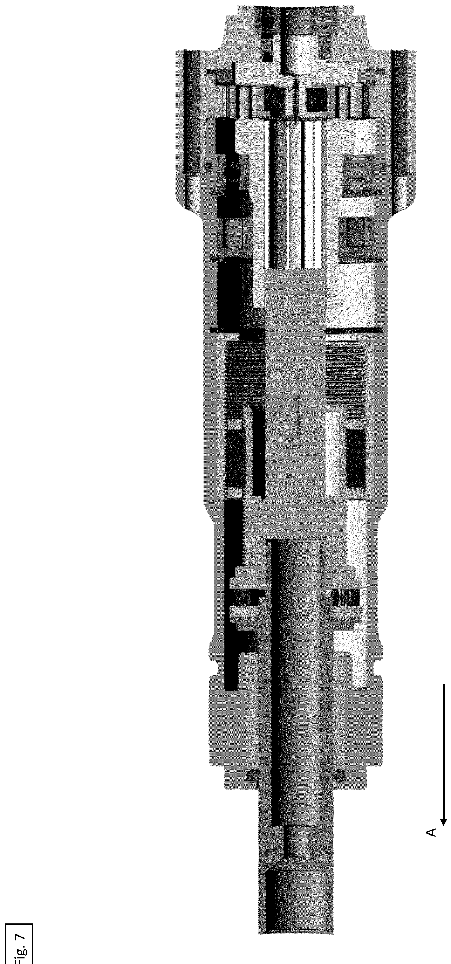

Wie insbesondere in Figur 3 gezeigt, enthält die als Exzentergetriebevorrichtung ausgestaltete Getriebevorrichtung 10 weiterhin im Wesentlichen einen Antriebsexzenter 14, ein Exzenterzahnrad 15, ein Hohlzahnrad 16 sowie eine Ausgleichskupplung 17. Der Antriebsexzenter 14 weist eine Ausgleichsmasse 18 (auch Wuchtmasse oder Auswuchtmasse genannt) auf, der über die Antriebswelle 9 mit dem Antrieb 8 verbunden ist. Zwischen dem Antriebsexzenter 14 und dem Antrieb 8 ist ein Lager 30 positioniert, vgl. Figur 6 und 7. Das Exzenterzahnrad 15 enthält eine Aussparung 15a für ein Kugellager 19. Der Antriebsexzenter 14 ist in das Kugellager 19 eingepasst und dadurch mitdem Exzenterzahnrad 15 drehfest verbunden. Durch ein Drehen des Antriebsexzenters 14 in Drehrichtung R wird auch das Exzenterzahnrad 15 entsprechend taumelnd gedreht.
Darüber hinaus ist das Exzenterzahnrad 15 in dem Hohlzahnrad 16 positioniert. Das Hohlzahnrad 16 ist drehfest mit der Innenseite des Gehäuses 2 der Werkzeugmaschine 1 verbunden. Das Exzenterzahnrad 15 und das Hohlzahnrad 16 weisen eine Evolventenverzahnung 20 auf, vgl. Figur 3.

Des Weiteren enthält das Exzenterzahnrad 15 eine Anzahl an kreisförmig um den Antriebsexzenter 14 angeordnete Aussparungen 21. In dem Ausführungsbeispiel, welches in den Figuren gezeigt ist, sind die Aussparungen 21 in Form von elf Durchbohrungen dargestellt. Es können jedoch auch mehr oder weniger als elf Durchbohrungen sein. Gemäß einer alternativen Ausgestaltung können die Aussparungen 21 auch als Sacklöcherdargestellt sein. Die Sacklöcher sind so angeordnet, dass das jeweilige geschlossene Ende eines Sacklochs entgegen der Pfeilrichtung A angeordnet ist und das offene Ende des Sacklochs in Pfeilrichtung A zeigt.
Im vorliegenden Ausführungsbeispiel ist die Ausgleichskupplung 17 als Parallelkurbelkupplung mit Kupplungselementen 22 ausgestaltet. Jede der Durchbohrungen 21 des Exzenterzahnrads 15 dient jeweils zum Aufnehmen eines Kupplungselements 22. Im vorliegenden Ausführungsbeispiel sind die Kupplungselements 22 als Kupplungsstifte ausgestaltet.
Die Ausgleichskupplung 17 kann daher als Parallelkurbelkupplung oder auch als Stift- bzw. Kurbelkupplung bezeichnet werden.
Wie ebenfalls in Figur 3 ersichtlich ragt das freie Ende 22a eines jeden Kupplungsstiftes 22 in Pfeilrichtung A aus den Durchbohrungen 21 des Exzenterzahnrads 15 heraus. Die freien Enden 22a eines jeden Kupplungsstiftes 22 sind wiederum mit der Kopplungsvorrichtung 11 so verbunden, dass ein Drehmoment von den Kupplungsstiften 22 der Ausgleichskupplung 17 auf die Abtriebswelle 11 übertragen werden kann.

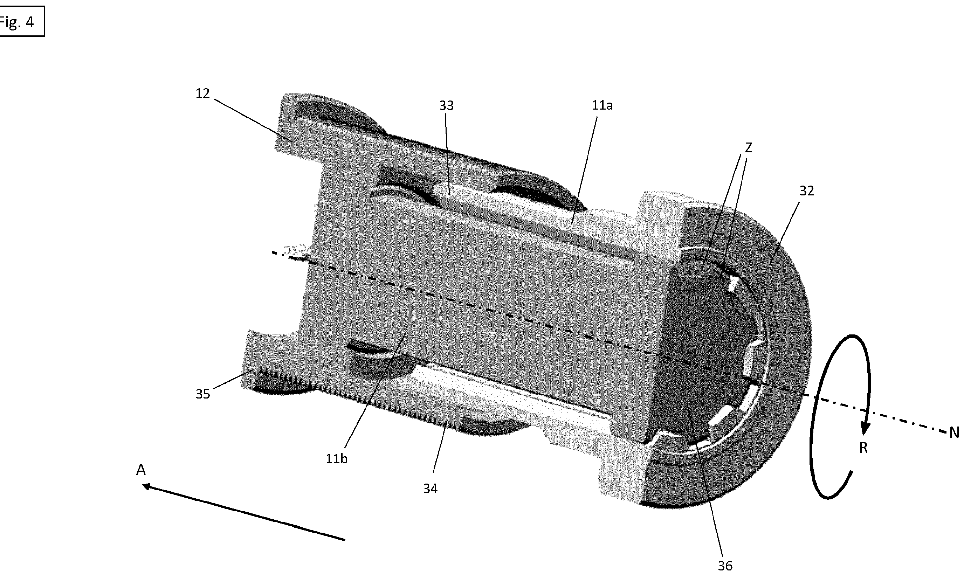

Die Kopplungsvorrichtung 11 weist im Wesentlichen eine zylindrische Form auf und enthält eine Hülse 11a sowie einen Kolben 11b. Die Kopplungsvorrichtung 11 funktioniert im Prinzip als Abtriebswelle von der Getriebevorrichtung 10 zu dem Gewindespindeltrieb 12.
Wie in Figur 4 zu erkennen ist, ist der Kolben 11 b im Inneren der Hülse 11a positioniert. Die Hülse 11a weist eine zylindrische Grundform mit einem ersten Ende 32 und einem zweiten Ende 33 auf. Zwischen dem ersten Ende 32 und dem zweiten Ende 33 der Hülse ist eine Abstufung vorgesehen, sodass die Außenhülle der Hülse 11a einen ersten Durchmesser und einen zweiten Durchmesser aufweist. Der erste Durchmesser ist dabei größer als der zweite Durchmesser. Wie in Figur 4 gezeigt, ist der erste Durchmesser in Pfeilrichtung A vor dem zweiten Durchmesser positioniert. Der Innendurchmesser der Hülse 11a weist einen gleichbleibenden Durchmesser auf. Der Kolben 11b weist ebenfalls eine im Wesentlichen zylindrische Grundform auf mit einem ersten Ende 34 und einem zweiten Ende 35. An dem ersten Ende 34 weist der Kolben 11b ein Zahnradelement 36 auf. Das zweite Ende 35 des Kolbens 11b ist drehfest mit dem Gewindespindeltrieb 12 verbunden, sodass eine Drehbewegung des Kolbens 11b auf den Gewindespindeltrieb 12 übertragen werden kann.
Zwischen einer Außenwand AW des Kolbens 11b und einer Innenwand IW der Hülse 11a ist ein Verzahnungsprofil 31 zur drehfesten Verbindung des Kolbens 11b zu der Hülse 11a enthalten. Das Verzahnungsprofil 31 enthält eine Vielzahl von in Pfeilrichtung A erstreckende Zähne Z an der Innenwand IW der Hülse und entsprechend korrespondierend ausgestaltete Zähne Z an dem Zahnradelement 36 des Kolbens 11b. In dem vorliegenden Ausführungsbeispiel ist die Querschnittsfläche eines jeden Zahns Z in Form eines symmetrischen Trapez ausgestaltete, vgl. Figur 4. Entsprechend alternativer Ausführungsformen kann jedoch die Querschnittsfläche eines Zahns Z nahezu alle möglichen symmetrischen oder asymmetrischen Formen annehmen. Durch das Verzahnungsprofil 31 zwischen der Außenwand AW des Kolbens 11b und der Innenwand IW der Hülse 11a ist der Kolben 11b zum einen drehfest mit der Hülse 11a verbunden zum anderen kann der Kolben 11b in Pfeilrichtung A axial im Inneren der Hülse 11a bewegt werden.

Mit Hilfe eines Hauptlagers 23 und Sekundärlagers 24 ist die Kopplungsvorrichtung 11 im Inneren des Gehäuses 2 der Werkzeugmaschine 1 gelagert. Das Hauptlager 23 ist an dem zweiten Durchmesser der Hülse 11a und das Sekundärlager 24 ist an dem ersten Durchmesser des Hülse positioniert. Das Hauptlager 23 ist als Wälzlager bzw. Kugellager und das Sekundärlager 24 ist als Gleitlager ausgestaltet. Gemäß eines alternativen Ausführungsbeispiels kann sowohl das Hauptlager 23 als auch das Sekundärlager 24 entweder als Wälzlager oder Gleitlager ausgestaltet sein. Entsprechend einer alternativen Ausgestaltungsform kann auch lediglich nur ein einziges Lager vorgesehen sein.

Wie bereits vorstehend beschrieben ist die Kopplungsvorrichtung 11 mit der Ausgleichskupplung 17 der Getriebevorrichtung 10 verbunden. Die Kopplungsvorrichtung 11 ist wiederum mit dem Gewindespindeltrieb 12 verbunden. Durch den Gewindespindeltrieb 12 kann die Drehbewegung der Kopplungsvorrichtung 11 in eine Linearbewegung umgewandelt werden.
Wie den Figuren entnommen werden kann ist der Gewindespindeltrieb 12 mit dem Linearaktuator 13 verbunden.

Durch die Drehbewegung der Antriebswelle 9 in Drehrichtung R um die Drehachse N dreht sich unter anderem die Hülse 11a und der Kolben 11b ebenfalls in Drehrichtung R um die Drehachse N, wodurch der Kolben 11b in Pfeilrichtung A geschoben wird.

Figur 5 zeigt den Kolben 11b in einer ersten Position, wobei sich der Kolben 11b noch in einer Ausgangsstellung befindet. Das erste Ende 34 des Kolbens 11b mit dem Zahnradelement 36 befindet sich im Wesentlichen noch an der Getriebevorrichtung 10.

In Figur 6 ist der Kolben 11b in Pfeilrichtung A bewegt worden, sodass das Zahnradelement 36 sich ungefähr in der Mitte der Hülse 11a befindet. Durch das axiale Bewegen des Kolbens 11b in Pfeilrichtung A wird auch die Schubstange 26 in Pfeilrichtung A bewegt.

In Figur 7 ist der Kolben 11b noch weiter in Pfeilrichtung A bewegt worden, sodass das Zahnradelement 36 des Kolbens 11b sich an dem zweiten Ende 33 der Hülse 11a befindet. Die Schubstange 26 ist nun maximal in Pfeilrichtung A durch den Kolben 11b geschoben worden.

Der Linearaktuator 13 enthält im Wesentlichen eine Druckfeder 25 sowie eine Schubstange 26. Die Druckfeder 25 agiert dabei als Rückstellfeder für den Linearaktuator 13.

An dem Linearaktuator 13 ist eine Kraftflussumlenkungseinrichtung 27 vorgesehen. Mit Hilfe des Linearaktuators 13 und der Kraftflussumlenkungseinrichtung 27 wird die lineare Kraft des Linearaktuators 13 so auf die Werkzeugaufnahme 3 übertragen, dass das als Presskopf ausgestaltete Werkzeug 6 zwischen einer geöffneten und geschlossenen Position bewegt werden kann.

Der als Elektromotor ausgestaltete Antrieb 8 kann bei einer maximalen Ausfahr- und Einfahrgeschwindigkeit des Linearaktuators 13 mit einem Drehzahlwert zwischen 10.000 und 30.000 rpm dreht. Insbesondere ist ein Drehzahlwert zwischen 15.000 bis 18.000 rpm für den Antrieb 8 vorgesehen

### Bezugszeichenliste

- 1: Werkzeugmaschine
- 2: Gehäuse
- 2a: vorderes Ende 2a des Gehäuses
- 2b: hinteres Ende des Gehäuses
- 2c: linke Seitenfläche des Gehäuses
- 2d: rechte Seitenfläche des Gehäuses
- 2e: Oberseite des Gehäuses
- 2f: Unterseite des Gehäuses
- 3: Werkzeugaufnahme
- 4: Energieversorgung
- 5: Schnittstelle
- 6: Werkzeug
- 7: Aktivierungsschalter
- 8: Antrieb
- 9: Antriebswelle
- 10: Getriebevorrichtung
- 11: Kopplungsvorrichtung
- 11a: Kolben
- 11b: Hülse
- 12: Gewindespindeltrieb
- 13: Linearaktuator
- 14: Antriebsexzenter
- 15: Exzenterzahnrad
- 15a: Aussparung am Exzenterzahnrad
- 16: Hohlzahnrad
- 17: Ausgleichskupplung
- 18: Ausgleichsmasse
- 19: Kugellager
- 20: Evolventenverzahnung
- 21: Aussparungen am Exzenterzahnrad
- 22: Kupplungselement
- 22a: freies Ende am Kupplungselement
- 23: Hauptlager
- 24: Sekundärlager
- 25: Druckfeder
- 26: Schubstange
- 27: Kraftflussumlenkungseinrichtung
- 30: Lager
- 31: Verzahnungsprofil
- 32: erstes Ende der Hülse
- 33: zweites Ende der Hülse
- 34: erstes Ende des Kolbens
- 35: zweites Ende des Kolbens
- 36: Zahnradelement
- AW: Außenwand des Kolbens
- IW: Innenwand der Hülse
- Z: Zähne des Verzahnungsprofils

## Patentansprüche

1. Werkzeugmaschine (1), insbesondere eine Rohrpresse, enthaltend einen Antrieb (8), eine Getriebevorrichtung (10), einen Gewindespindeltrieb (12) und einen Linearaktuator (13), wobei ein von dem Antrieb (8) erzeugtes Drehmoment über die Getriebevorrichtung (10), den Gewindespindeltrieb (12) auf den Linearaktuator (13) übertragbar ist,
**gekennzeichnet durch** eine Kopplungsvorrichtung (11) mit einer Hülse (11a) und einem Kolben (11b) zur Übertragung einer von der Getriebevorrichtung (10) erzeugten Drehbewegung in eine auf den Gewindespindeltrieb (12) zu übertragende Linearbewegung von der Getriebevorrichtung (10) zur Gewindespindeltrieb (12), wobei zwischen der Hülse (11a) und dem Kolben (11b) ein Verzahnungsprofil (31) zur drehfesten Verbindung des Kolbens (11b) zu der Hülse (11a) enthalten ist, sodass der Kolben (11b) axial verschiebbar zu der Hülse (11a) sowie drehfest mit dem Gewindespindeltrieb (12) angeordnet ist.

2. Werkzeugmaschine (1) nach Anspruch 1,
**dadurch gekennzeichnet, dass** das Verzahnungsprofil (31) in Form einer Vielzahngeometrie ausgestaltet ist.
